# EUROPEAN PATENT APPLICATION

(11) **EP 3 708 234 A1**
(43) Date of publication of application: **16.09.2020**
(21) Application number: 19213309.8
(22) Date of filing: 03.12.2019
(51) Int. Cl.: B01D 29/21, B01D 35/00, B01D 35/027

(54) **OIL FILTER ASSEMBLY FOR AN INTEGRATED DRIVE GENERATOR**

(30) Priority: 11.03.2019 US 201916298682
(71) Applicant: Hamilton Sundstrand Corporation, Charlotte, NC 28217-4578 (US)
(72) Inventor: HOCHSTETLER, Derek R., Rockford, IL Illinois 61101 (US); LEMMERS, Glenn C. Jr., Loves Park, IL Illinois 61111 (US)
(74) Representative: Dehns

(57) **Abstract**

An oil filter assembly for an integrated drive generator is disclosed, which includes an elongated cylindrical filter element (20) having opposed upper and lower end portions, a longitudinal axis, an outer diameter and an inner diameter, wherein the oil filter assembly that includes the filter element has an axial length that is greater than 4.60 inches (11.68 cm).

## Description

### BACKGROUND OF THE INVENTION

### 1. Field of the Invention

The subject invention is directed to an oil filter assembly, and more particularly, to an oil filter cartridge assembly for use with an Integrated Drive Generator (IDG) coupled to a gas turbine engine.

### 2. Description of Related Art

Aircraft currently rely upon electrical, pneumatic and hydraulic systems for secondary power generation. A typical electrical system in an aircraft utilizes an IDG coupled to a gas turbine engine to provide fixed frequency power to the power distribution system and to a variety of loads.

An exemplary IDG includes a generator, a hydraulic unit and a differential assembly arranged in a common housing. The differential assembly is coupled to a gas turbine engine by way of an input shaft. The rotational speed of the input shaft varies during the operation of the gas turbine engine. The hydraulic unit cooperates with the differential assembly to provide a constant speed to the generator throughout the operating range of the engine.

IDGs operate at elevated temperatures. Synthetic oils are used for cooling and lubrication in IDGs, and as a working fluid. In these systems, tiny metallic wear particulates are formed from normal operation. These wear particles are carried by the oil within an oil circuit, and must be removed to maintain the working efficiency and life of the system.

For this reason, the oil circuit includes an oil filter located in a housing having an external cover that facilitates installation, removal and periodic replacement of the oil filter. It is also desirable to design oil filters to optimize the dirt holding capacity and operational life of the filter. This is typically done by increasing the amount of filter media within the fixed dimensions of the filter cartridge, since the filter housing that supports the cartridge has dimensions that are immutable due to spatial constraints, especially in the case of an IDG coupled to a gas turbine engine on an aircraft.

However, as the amount of filter media within the cartridge is decreased, the pressure drop through the filter cartridge also increases, impacting the efficiency of the system. It would be beneficial therefore, to maximize the amount of filter media in the oil filter without increasing the pressure drop through the filter cartridge. The subject invention provides a solution by way of a uniquely configured cover for the oil filter housing, which is designed to accommodate a filter cartridge that has a greater axial length than the filter housing within which it is accommodated, while remaining within the spatial constraints that permit ready access to and removal of the cover and filter from the housing for routine maintenance purposes.

### SUMMARY OF THE DISCLOSURE

The subject invention is directed to a new and useful oil filter assembly for an Integrated Drive Generator (IDG) coupled to a gas turbine engine. The oil filter assembly includes an elongated cylindrical filter element having opposed upper and lower end portions, a longitudinal axis, an outer diameter and an inner diameter, wherein the oil filter assembly that includes the filter element has an axial length that is greater than 4.60 inches (11.68 cm).

The oil filer assembly further includes an upper end cap that is operatively associated with the upper end portion of the filter element and has an axial length of about .10 inches (2.54 mm), and a lower end cap that is operatively associated with the lower end portion of the filter element and has an axial length of about .42 inches (1.07 cm).

The axial length of the filter assembly is about 4.68 inches (11.89 cm) to about 4.75 inches (12.06 cm), and the maximum outer diameter of the filter element is 1.78 inches (4.52 cm). The dirt holding capacity of the filter element is greater than 3.7 grams, and the maximum pressure drop across the filter element is 10 psi (68.9 kPa) at 17.5 gallon (79.5 L) per minute of oil flow with a fluid viscosity of 27 centipoise (0.027 Pa.s).

Preferably, the filter element is a pleated filter element and it comprises a multi-layered composite having a plurality of media layers bounded by an upstream support layer and a downstream drainage layer, and a perforated core is operatively associated with the inner diameter thereof.

The subject invention is also directed to an oil filter assembly for an integrated drive generator, that includes an elongated cylindrical pleated filter element having opposed upper and lower end portions, a longitudinal axis, an outer diameter and an inner diameter, an upper end cap operatively associated with the upper end portion of the pleated filter element and having an axial length of about .10 inches (2.54 mm), a lower end cap operatively associated with the lower end portion of the pleated filter element and having an axial length of about .42 inches (1.07 cm), and a perforated core tube operatively associated with the inner diameter of the pleated filter element and extending between the upper and lower end caps, wherein the oil filter assembly has an axial length that is greater than 4.60 inches (11.68 cm), and preferably about 4.68 inches (11.89 cm) to about 4.75 inches (12.06 cm).

These and other features of the oil filter cartridge assembly of the subject invention will become more readily apparent to those having ordinary skill in the art to which the subject invention appertains from the detailed description of the preferred embodiments taken in conjunction with the following brief description of the drawings.

### BRIEF DESCRIPTION OF THE DRAWINGS

So that those having ordinary skill in the art will readily understand how to make and use the subject invention without undue experimentation, preferred embodiments thereof will be described in detail herein below with reference to the figures wherein:
Fig. 1 is an illustration of an Integrated Drive Generator (IDG) coupled to a gas turbine engine that utilizes the oil filter assembly of the subject invention;
Fig. 2 is a perspective view of the oil filter assembly of the subject invention along with the filter cover removed from the filter housing of the IDG;
Fig. 3 is an exploded perspective view of the oil filter cartridge of the subject invention with parts separated for ease of illustration;
Fig. 4 is a cross-sectional view of the filter cartridge assembly of the subject invention taken along line 4-4 of Fig. 3;
Fig. 5 is an enlarged localized view of the lower end cap of the filter cartridge of the subject invention taken from Fig. 4; and
Fig. 6 is an enlarged localized cross-sectional view taken along line 6-6 of Fig. 1 illustrating the elongated oil filter cartridge of the subject invention within the housing enclosed by the cover, and showing the path of fluid flow through the oil filter.

### DETAILED DESCRIPTION OF THE PREFERRED EMBODIMENTS

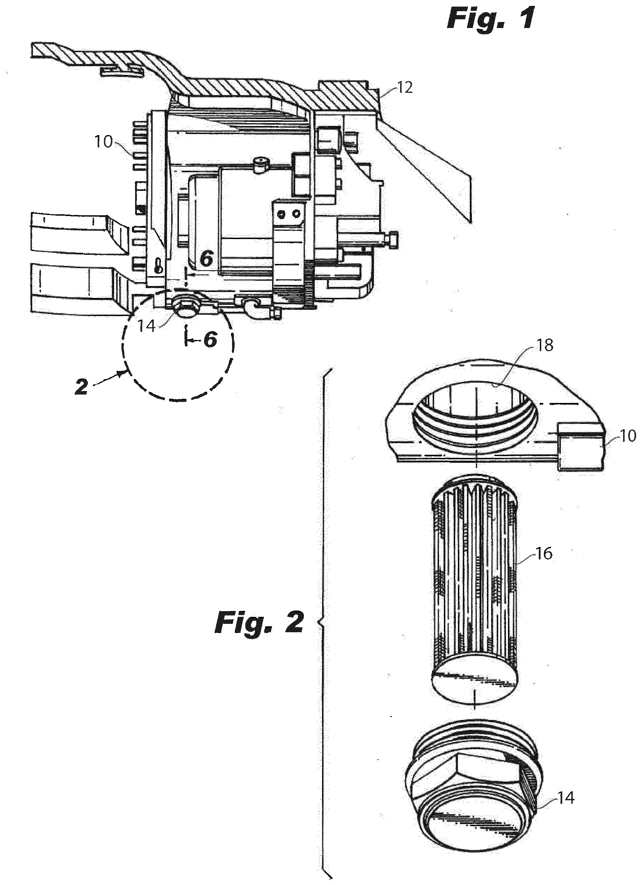

Referring now to the drawings wherein like reference numerals identify similar structural features, there is illustrated in Fig. 1 an Integrated Drive Generator (IDG) 10 coupled to a gas turbine engine 12 that employs the new and useful oil filter cartridge assembly 16 of the subject invention. More particularly, as shown in Fig. 2, the filter cartridge assembly 16 is accommodated with a filter cartridge housing 18 that is enclosed by an external cover 14. The cover 14 and filter cartridge assembly 16 are dimensioned and configured to remain within the spatial constraints that permit ready access to and removal of the cover 14 and oil filter cartridge 16 from the housing 18 of the IDG 10 for routine maintenance purposes.

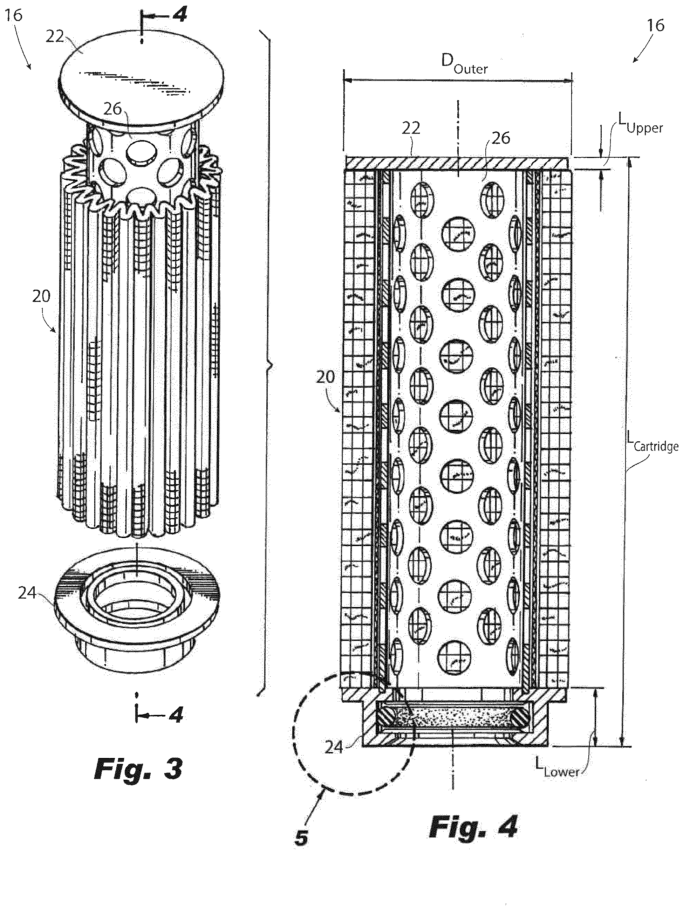

Referring now to Fig. 3, the oil filter cartridge assembly 16 includes an elongated generally cylindrical radially pleated filter element 20, an upper end cap 22 operatively associated with an upper end portion of the filter element 20, a lower end cap 24 operatively associated with the lower end portion of the filter element 20, and a perforated central core tube 26 coaxially positioned within the central bore of the filter element 20.

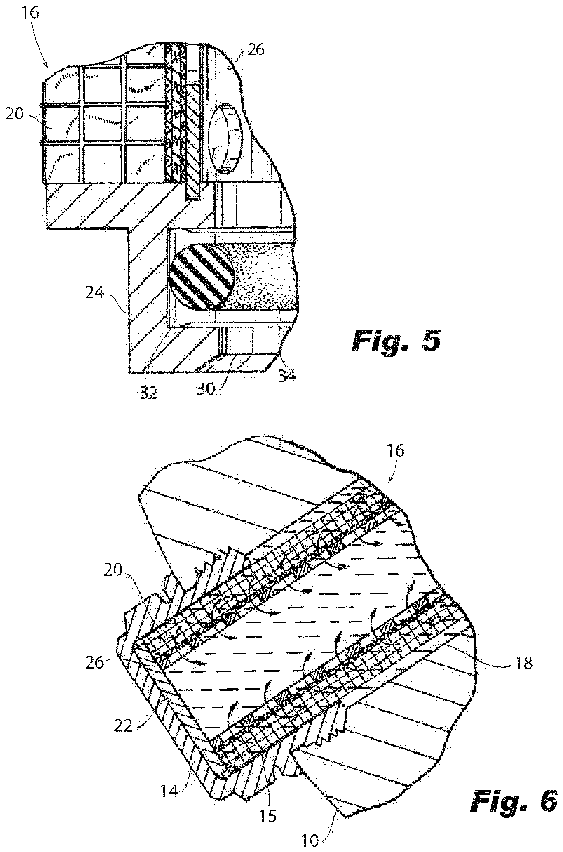

Preferably, the filter element 20 is a multi-layered composite filter element that includes a plurality of media layers bounded by an upstream support layer and a downstream drainage layer. The media can be formed from a woven or non-woven material, and the support and drainage layers are preferably formed from a mesh or screen material. The core tube 26 is preferably mated or otherwise connected to the upper and lower end caps 22 and 24. As best seen in Fig. 5, the lower end cap 24 has an axial bore 30 that communicates with the central core tube 26 and includes an annular recessed channel 32 that accommodates an annular seal 34.

In accordance with a preferred embodiment of the subject invention, the oil filter cartridge assembly 16 has a greater axial length (L_{Cartridge}) than the filter housing 18 within which it is accommodated, as best seen n Fig. 6. Preferably, as illustrated in Fig. 4, the oil filter assembly 16 has an overall axial length L_{Cartridge} that is greater than 4.60 inches (11.68 cm). More particularly, the overall axial length L_{Cartridge} of the filter cartridge assembly 16 is preferably about 4.68 inches (11.89 cm) to about 4.75 inches (12.06 cm). The upper end cap 22 preferably has an axial length (L_{Upper}) of about .10 inches (2.54 mm), and the lower end cap preferably has an axial length (L_{Lower}) of about .42 inches (1.07 cm).

In addition, the maximum outer diameter (D_{Outer}) of the filter element 20 is about 1.78 inches (4.52 cm). Preferably, the dirt holding capacity of the filter element 20 is greater than 3.7 grams, and the maximum pressure drop across the filter element 20 is preferably about 10 psi (68.9 kPa) at 17.5 gallon (79.5 L) per minute of oil flow with a fluid viscosity of 27 centipoise (0.027 Pa.s).

Referring now to Fig. 6, when the oil filter cartridge assembly 16 is installed in the housing 18 of the IDG 10, the end portion of the oil filter cartridge assembly 16 advantageously fits within the axial bore 15 of the cover 14. Moreover, when the end portion of the oil filter cartridge assembly 16 is within the axial bore 15 of the cover 14, it extends beyond the housing 18, within the cover 14. This allows the filter cartridge assembly 16 to have a greater axial length than the filter housing 18 within which it is accommodated. As a result, the dirt holding capacity and operational life of the oil filter cartridge assembly 16 can be optimized, while the cover 14 remains within the spatial constraints that permit ready access to and removal of the cover 14 and oil filter 16 from the housing 18 of IDG 10 for routine maintenance purposes.

While the subject disclosure has been shown and described with reference to preferred embodiments, those skilled in the art will readily appreciate that changes and/or modifications may be made thereto without departing from the scope of the invention as defined by the claims.

## Claims

1. An oil filter assembly for an integrated drive generator, comprising:
an elongated cylindrical filter element (20) having opposed upper and lower end portions, a longitudinal axis, an outer diameter and an inner diameter, wherein the oil filter assembly that includes the filter element has an axial length that is greater than 4.60 inches (11.68 cm).

2. An oil filter assembly as recited in Claim 1, wherein an upper end cap (22) is operatively associated with the upper end portion of the filter element and has an axial length of about .10 inches (2.54 mm).

3. An oil filter assembly as recited in Claim 1 or 2, wherein a lower end cap (24) is operatively associated with the lower end portion of the filter element and has an axial length of about .42 inches (1.07 cm).

4. An oil filter assembly as recited in Claim 1, 2 or 3 wherein the axial length of the filter assembly is about 4.68 inches (11.89 cm) to about 4.75 inches (12.06 cm).

5. An oil filter assembly as recited in any preceding claim, wherein the maximum outer diameter of the filter element is 1.78 inches (4.52 cm).

6. An oil filter assembly as recited in any preceding claim, wherein the dirt holding capacity of the filter element is greater than 3.7 grams.

7. An oil filter assembly as recited in any preceding claim, wherein the maximum pressure drop across the filter element is 10 psi (68.9 kPa) at 17.5 gallon (79.5L) per minute of oil flow with a fluid viscosity of 27 centipoise (0.027 Pa.s).

8. An oil filter assembly as recited in any preceding claim, wherein the filter element is a pleated filter element having an upstream support layer and a downstream drainage layer.

9. An oil filter assembly as recited in any preceding claim, wherein the filter element has a perforated core operatively associated with the inner diameter thereof.

10. An oil filter assembly for an integrated drive generator, comprising:
a) an elongated cylindrical pleated filter element having opposed upper and lower end portions, a longitudinal axis, an outer diameter and an inner diameter;
b) an upper end cap operatively associated with the upper end portion of the pleated filter element and having an axial length of about .10 inches (2.54 mm);
c) a lower end cap operatively associated with the lower end portion of the pleated filter element and having an axial length of about .42 inches (1.07 cm); and
d) a perforated core tube operatively associated with the inner diameter of the pleated filter element and extending between the upper and lower end caps, wherein the oil filter assembly has an axial length that is greater than 4.60 inches (11.68 cm).

11. An oil filter assembly as recited in Claim 10, wherein the axial length of the oil filter assembly is about 4.68 inches (11.89 cm) to about 4.75 inches (12.06 cm).

12. An oil filter assembly as recited in Claim 10 or 11, wherein the maximum outer diameter of the pleated filter element is 1.78 inches (4.52 cm).

13. An oil filter assembly as recited in Claim 10, 11 or 12 wherein the dirt holding capacity of the pleated filter element is greater than 3.7 grams.

14. An oil filter assembly as recited in any of Claims 10 to 13, wherein the maximum pressure drop across the pleated filter element is 10 psi (68.9 kPa) at 17.5 gallon (79.5L) per minute of oil flow with a fluid viscosity of 27 centipoise (0.027 Pa.s).

15. An oil filter assembly as recited in any of Claims 10 to 14, wherein the pleated filter element is a multi-layered composite having a plurality of media layers bounded by an upstream support layer and a downstream drainage layer.
